# EUROPEAN PATENT APPLICATION

(11) **EP 3 808 889 A1**
(43) Date of publication of application: **21.04.2021**
(21) Application number: 20207400.1
(22) Date of filing: 17.04.2019
(51) Int. Cl.: D06F 58/30, D06F 58/24, D06F 103/00, D06F 103/08

(54) **LAUNDRY TREATING APPARATUS**

(30) Priority: 18.04.2018 KR 20180045253
(62) Divisional of application: 19169886.9
(71) Applicant: LG Electronics Inc., Yeongdeungpo-gu Seoul 07336 (KR)
(72) Inventor: KIM, Shinwon, Seoul 08592 (KR); AHN, Ingeun, Seoul 08592 (KR); HEO, Seonil, Seoul 08592 (KR)
(74) Representative: Vossius & Partner Patentanwälte Rechtsanwälte mbB

(57) **Abstract**

The invention provides a laundry treating apparatus comprising a cabinet that defines an exterior appearance; a drum rotatably received in the cabinet and configured to accommodate laundry; a drive unit configured to rotate the drum; a hot air supply unit provided to be communicated with the drum to supply high-temperature air to the drum; a collection portion provided to collect the water condensed from the drum and to be communicated with the hot air supply unit; a drainage pump configured to discharge the water collected in the collection portion outside the cabinet; a controller (P) configured to control the operations of the drive unit, the hot air supply unit and the drainage pump; characterized in that the laundry treating apparatus further comprises a thawing command input unit configured to input a command for thawing the water of the collection portion to the controller (P).

## Description

Embodiments of the present disclosure relate to a laundry treating apparatus and a control method of the same, more particularly, a laundry treating apparatus which may sense a freeze and burst and thaw the freeze and burst automatically and a control method of the same.

A laundry treating apparatus may be categorized into a washing machine, a dryer, a refresher and the like. The refresher refers to an apparatus configured to remove dust, bacteria or the like from the clothes that are put on by users more than once (e.g., LGE TROMM Styler as the product name).

The dryer may be classified into an exhaustion type dryer and a circulation type dryer. Both of the dryers perform drying by using the hot air generated after air is heated by a heater and exposing the hot air to the clothes.

In a conventional dryer, the hot air having penetrated the clothes will contain a lot of moisture or water and dry the clothes. The high-temperature and high-humidity hot air containing the moisture is discharged outside a drum and becomes a low-temperature air while passing through a duct or heat exchanger. At this time, the moisture is condensed.

The condensate is collected in an auxiliary collecting unit by a preset amount and discharged to a drainage pump. The drying process for the clothes may be completed. However, when the temperature falls in the winter, the condensate collected and remaining in the collecting unit is likely to become frozen and burst.

If the condensate is frozen and burst in the collecting unit, the volume of the condensate becomes expanded enough to break the collecting unit. Also, if the dryer is actuated in such a frozen state, the condensate might accumulate on the frozen ice and there might be an accident of water leakage.

In addition, if the drainage pump constrained by the front water is actuated forcedly, a motor provided to drive the drainage pump might damage disadvantageously.

Accordingly, it becomes necessary whether the condensate is frozen in the collecting unit. If it is sensed that the condensate is frozen, the necessity is to the fore that the frozen condensate has to be thawed quickly.

However, the conventional dryer fails to sense whether the condensate is frozen properly and then a user is unable to take the spontaneous actions to thaw the frozen condensate disadvantageously.

Accordingly, the conventional dryer has a problem that the drainage pump might damage when it is forcedly actuated in the frozen state or that the operation of the dryer is shut off by the constrained drainage pump.

In addition, the conventional dryer is not able to thaw the frozen condensate automatically. Accordingly, even when finding out that the condensate is frozen, the user has to pour hot water in the conventional dryer and wait until it thaws naturally.

Accordingly, an object of the present invention is to address the above-noted and other problems and provide a laundry treating apparatus which may thaw a frozen condensate automatically, if condensate is frozen, and a control method of the same.

Another object of the present invention is to provide a laundry treating apparatus which may sense the frozen condensate and induce a user to take an action to thaw the frozen condensate and a control method of the same.

A further object of the present invention is to provide a laundry treating apparatus which may sense the frozen condensate when the condensate is frozen and perform the thawing even without the user's recognition of the frozen condensate and a control method of the same.

A further object of the present invention is to provide a laundry treating apparatus which may prevent the overload applied to a drainage pump when thawing the frozen condensate and sense whether to perform a thawing process and whether the thawing process is completed and a control method thereof.

A further object of the present invention is to provide a laundry treating apparatus which may prevent the overflow or leakage of the condensate while thawing the frozen condensate and a control method thereof.

A further object of the present invention is to provide a laundry treating apparatus which may perform the thawing process and complete even the drying process, without the stop of the operation or causing an error display on the outside of the laundry treating apparatus, and a control method of the same.

These objects are achieved with the features of the claims.

Embodiments of the present disclosure may provide a laundry treating apparatus comprising a laundry treating apparatus comprising: a cabinet that defines an exterior design; a drum rotatably mounted in the cabinet and configured to accommodate laundry; a drive unit configured to rotate the drum; a hot air supply unit configured to supply high-temperature air to the drum, in communication with the drum; a collection portion provided to collect the water condensed from the drum, in communication with the hot air supply unit; a drainage pump configured to discharge the water collected in the collection portion outside the cabinet; and a controller implemented to control the operations of the drive unit, the hot air supply unit and the drainage pump, wherein the laundry treating apparatus further comprises a thawing command input unit configured to input a command for thawing the water of the collection portion to the controller.

The controller may drive one or more of the hot air supply unit and the drive unit, when the thawing command input unit is selected, and shut off the drive of the drainage pump for a reference time period. The heat may be supplied to thaw the frozen condensate by shutting off the drive of the drainage pump for the reference time while the damage to the drainage pump may be prevented.

The controller may check a state where the thawing of the condensate collected in the collection portion is performed or whether the thawing is completed by driving the drainage pump when the reference time passes. Accordingly, the thawing may be recognized only by using the drainage pump.

The controller may check a thawed state of the frozen condensate by driving the drainage pump at a third time interval after the reference time. The controller may check that the collection portion is thawed by sensing that the rotation number of the drainage pump is a reference rotation number or more. The controller may discharge the thawed condensate by driving the drainage pump when the thawing is completed.

The laundry treating apparatus may further comprise a temperature sensor configured to sense the temperature of the drum or the hot air supply unit, wherein the controller determines that the condensate of the collection portion is frozen when sensing that the sensed temperature is lower than a reference temperature or the drainage pump is driven at a reference rotation number or less. Accordingly, the auxiliary configuration for sensing the frozen state may be omitted. The reference temperature may be higher than the freezing point of water. Even when the temperature of the area where the temperature sensor is higher than the temperature of the collection area, the frozen state may be figured out in consideration of that.

The controller may stop the operation of one or more of the drive unit, the hot air supply unit and the drainage pump, when it is sensed that the condensate of the collection portion is frozen but that the thawing command input unit is not selected.

The embodiments of the present invention may provide a control method of a laundry treating apparatus comprising a cabinet that defines an exterior design; a drum rotatably mounted in the cabinet and configured to accommodate laundry; a drive unit configured to rotate the drum; a hot air supply unit configured to supply high-temperature air to the drum, in communication with the drum; a collection portion provided to collect the water condensed from the drum, in communication with the hot air supply unit; a drainage pump configured to discharge the water collected in the collection portion outside the cabinet; a controller implemented to control the operations of the drive unit, the hot air supply unit and the drainage pump; and a thawing command input unit configured to input a command for thawing the water of the collection portion to the controller, the control method comprising: a thawing course input step for sensing an input of the thawing command input unit; and an intensive thawing step for transferring heat to the collection portion by driving the hot air supply unit.

The intensive thawing step may comprise a hot air supply step for transferring warmth to the collection portion by driving the hot air supply unit; and a drainage pump shut off step for shutting off the drive of the drainage pump for a reference time period. The drainage pump shut off step for preventing the damage to the drainage pump may be provided and the damage may be prevented while heat is supplied.

The control method of the laundry treating apparatus may further comprise a thawing check step for sensing one or more of a state where the condensate of the collection portion is thawed and whether the thawing is completed. The delay of the thawing course may be prevented by checking the thawing state in real time. Unless the thawing course is normally delayed, it is displayed on the display unit to induce the user to take an active action for that.

The thawing check step may sense the rotation number of the drainage pump while driving the drainage pump at a first time interval after the reference time. Accordingly, the heat supply for a long time may be shut off. The thawing check step may determine that the thawing is completed when the drainage pump is driven at a reference rotation number or more after the reference time. Accordingly, the constraining of the drainage pump is released and it may be determined that the thawing is completed.

The control method of the laundry treating apparatus may further comprise a frozen state sensing step for determining that the condensate of the collection portion is frozen. At this time, the control method of the laundry treating apparatus may further comprise a display unit configured to display a state of the laundry treating apparatus, and the control method further comprising: an error display step for displaying an error on the display unit, when it is sensed that the condensate of the collection portion is frozen but the input of the thawing command input unit is not sensed and stopping the operation of the laundry treating apparatus. Accordingly, the frozen state may be sensed actively such that the user may be induced to perform the thawing course.

The embodiments of the present invention may provide a control method of a laundry treating apparatus comprising a drum rotatably mounted in the cabinet and configured to accommodate laundry; a drive unit configured to rotate the drum; a hot air supply unit configured to supply high-temperature air to the drum, in communication with the drum; a collection portion provided to collect the water condensed from the drum, in communication with the hot air supply unit; and a drainage pump configured to discharge the water collected in the collection portion outside the cabinet, the control method comprising: an abnormal condition determining step for sensing whether the condensate of the collection portion is frozen.

The control method of the laundry treating apparatus may further comprise a temperature sensor configured to sense the temperature of one or more of the drum and the hot air supply unit, wherein the abnormal condition determining step determines that the condensate of the collection portion is frozen, when sensing that the drainage pump is driven at a reference rotation number or less, with the temperature being a reference temperature or less.

The reference temperature may be higher than the freezing point of water. It may be sensed whether the collection portion is frozen, considering an overall state such as the heat supplied by the hot air supply unit and the warmth inside the laundry treating apparatus.

Meanwhile, the laundry treating apparatus may further comprise a controller implemented to stop the operation of the laundry treating apparatus when sensing an abnormal state including the constraining of the drainage pump. The control method of the laundry treating apparatus may further comprise an error ignoring step for implementing the controller to shut off the stop of the laundry treating apparatus, when sensing that the condensate of the collection portion is frozen. Accordingly, the thawing course may be performed actively without stopping the operation of the laundry treating apparatus. In other words, the control method of the laundry treating apparatus may further comprise a fast thawing step for transferring heat to the collection portion by driving the hot air supply unit, when sensing that the condensate of the collection portion is frozen.

The fast thawing step may comprise a hot air supply step for transferring warmth even to the collection portion by driving the hot air supply unit; and a drainage pump forcibly stopping step for shutting off the operation of the drainage pump for a reference time period. Accordingly, the damage to the drainage pump caused during the thawing process may be prevented.

The control method of the laundry treating apparatus may further comprise a thawing check step for sensing one or more of a state where the condensate of the collection portion is thawed and whether the thawing is completed. Accordingly, it may be prevented that the thawing course is continued unless sensing that the thawing is completed.

The control method of the laundry treating apparatus may further comprise a water level sensor configured to sense a water level of the collection area, wherein the thawing check step checks the thawed state by driving the drainage pump, when the reference time passes or the water level reaches a reference water level.

The drawing check step may check the thawing state by driving the drainage pump at a second time interval from when the water level reaches the reference water level.

The control method of the laundry treating apparatus may further comprise a drying shut off step for shutting off the drive of the hot air supply unit unless the rotation number of the drainage pump reaches a reference rotation number or more for a third time period during the thawing check step. Accordingly, the moisture or water contained in the laundry may not accumulate in the collection area.

The hot air supply unit may comprise a heat pump configured to supply hot air to the drum; and a circulation fan configured to circulate air inside the drum and the hot air supply unit, and the drying shut off step drives the circulation fan. Accordingly, the natural thawing may be expected.

The thawing check step may determine that the thawing of the collection portion is completed, when sensing that the drainage pump is rotated at the reference rotation number or more, and the thawing check step may comprise a remnant discharge step for discharging the condensate of the collection area, when determining that the thawing is completed.

A laundry amount sensing step for sensing whether the laundry is loaded in the drum may be performed when the remnant discharge step ends, and a dry performing step for supplying hot air to the laundry and rotating the drum may be performed when it is sensed that the laundry is loaded in the drum.

The embodiment of the present invention may also provide a control method of a laundry treating apparatus comprising a drum rotatably mounted in the cabinet and configured to accommodate laundry; a drive unit configured to rotate the drum; a hot air supply unit configured to supply high-temperature air to the drum, in communication with the drum; a collection portion provided to collect the water condensed from the drum, in communication with the hot air supply unit; a drainage pump configured to discharge the water collected in the collection portion outside the cabinet; and a temperature sensor configured to sense the temperature of the drum or the hot air supply unit, the control method comprising: a laundry accommodation check step for checking whether the drum accommodates the laundry by rotating the drum; and a frozen state sensing step for sensing whether the condensate collected in the collection portion is frozen by sensing that the drainage pump is driven at a reference rotation number or less with the temperature being a reference temperature or less.

The control method of the laundry treating apparatus may further comprise a thawing step for thawing the collection portion by driving the hot air supply unit, when the frozen state is sensed.

When it is sensed that the drum accommodates no laundry and the frozen state is sensed, an intensive thawing step for thawing the collection portion is performed by consistently driving the hot air supply unit and driving the drainage pump at a first time interval only after a reference time. A fast thawing step for thawing the collection portion may be performed by consistently driving the hot air supply unit and driving the drainage pump at the second time interval that is shorter than the first time interval, only after the reference time. In other words, the thawing course may be selectively and properly performed according to the presence of the laundry.

The control method of the laundry treating apparatus may further comprise an error ignoring step for implementing the controller to shut off the stop of the laundry treating apparatus operation, when it is sensed that the condensate of the collection portion is frozen.

According to embodiments of the present disclosure, the laundry treating apparatus is capable of thawing a frozen condensate automatically, if condensate is frozen.

Furthermore, the laundry treating apparatus is capable of sensing the frozen condensate and inducing a user to take an action to thaw the frozen condensate.

Still further, the laundry treating apparatus is capable of sensing the frozen condensate when the condensate is frozen and performing the thawing even without the user's recognition of the frozen condensate.

Still further, the laundry treating apparatus is capable of preventing the overload applied to a drainage pump when thawing the frozen condensate and sensing whether to perform a thawing process and whether the thawing process is completed.

Still further, the laundry treating apparatus is capable of preventing the overflow or leakage of the condensate while thawing the frozen condensate.

Still further, the laundry treating apparatus is capable of performing the thawing process and complete even the drying process, without the stop of the operation or causing an error display on the outside of the laundry treating apparatus.

Further scope of applicability of the present invention will become apparent from the detailed description given hereinafter. However, it should be understood that the detailed description and specific examples, while indicating preferred embodiments of the invention, are given by illustration only, since various changes and modifications within the scope of the invention will become apparent to those skilled in the art from this detailed description.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1 is a diagram illustrating an exterior design of a laundry treating apparatus;
FIG. 2 is a sectional diagram of the laundry treating apparatus;
FIG. 3 is a diagram illustrating a base in which condensate is collected in the laundry treating apparatus;
FIG. 4 is a diagram illustrating an operation of a drainage pump configured to drain the condensate of the laundry treating apparatus;
FIG. 5 is a diagram illustrating a driving method of the drainage pump when the laundry treating apparatus is in a normal state;
FIG. 6 is a diagram illustrating a control method for thawing the frozen condensate when the condensate is frozen in the laundry treating apparatus;
FIG. 7 is a diagram illustrating a control method for sensing the frozen condensate in the laundry treating apparatus and thawing the frozen condensate; and
FIG. 8 is a diagram illustrating another embodiment of the control method for sensing and thawing the frozen the frozen condensate in the laundry treating apparatus.

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. A singular representation may include a plural representation unless it represents a definitely different meaning from the context. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

The laundry treating apparatus 10 in accordance with the present invention may be provided as a washing machine configured to perform a drying process for clothes, a dryer configured to perform a drying process for clothes or a styler configured to prevent the wrinkles caused on clothes and removing bad smell from the clothes.

Hereinafter, the laundry treating apparatus 10 is provided as the dryer and that is one of embodiments, while not excluded that the laundry treating apparatus 10 is provided as the washing machine or the dryer.

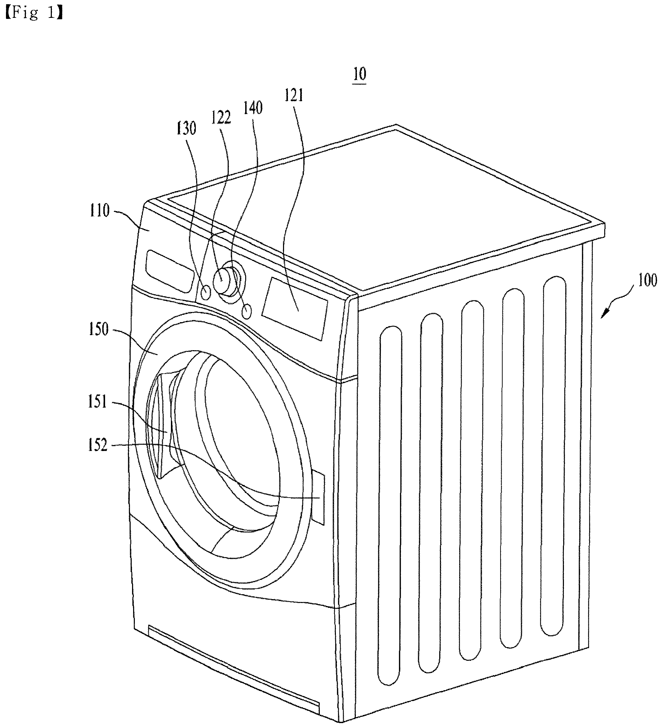

FIG. 1 is a diagram illustrating an exterior design of the laundry treating apparatus 10.

The laundry treating apparatus 10 may include a cabinet 100 that defines the exterior design of the laundry treating apparatus; a control panel 120 provided in the cabinet and configured to receive an input of an operation command or display a current state of the laundry treating apparatus; a door 150 rotatably coupled to a front of the cabinet 100 and configured to open and close a laundry introduction opening formed to load clothes; and a condensate tank 110 provided to collect a condensate therein.

The control panel 120 may be connected with an upper end of the cabinet 100 and a controller P including a microcomputer implemented to control the laundry treating apparatus may be provided in the control panel. The control panel 120 may include a display unit 121 configured to display a current state of the laundry treating apparatus; and an input unit configured to allow a user to input a command to the controller.

The display unit 121 may be a display screen configured of LCD or LED or a touch panel configured to receive an input of a command. The display unit 121 may display an operational state or an abnormal state of the laundry treating apparatus to transmit accurate information about the laundry treating apparatus to the user. In addition, the display unit 121 may further include a speaker to provide the user with an alarm.

The input unit may be provided as a rotary knob 122 to allow the user to select a drying course or option freely. The input unit may include a power input unit 14-configured to input the power of the laundry treating apparatus; and a command input unit 130 configured to input an additional control command.

The power input unit 140 and the command input unit 130 may be physical buttons to transmit commands even unless the power is supplied to the display unit 121.

At this time, the command input unit 130 may include a thaw command input unit configured to transmit a command for thawing a freeze and burst if the laundry treating apparatus 10 is frozen and burst.

The door 150 may be rotatably coupled to the front of the cabinet 100 and formed of a transparent material to make the opening of the cabinet visible.

The door 150 may include a handle 151 provided in one side and the other side connected to a hinge 152 to open and close the opening of the cabinet.

FIG. 1 illustrates that the door 150 is provided in a front of the front load type dryer and it is not excluded that the door 150 is provided in a top of the top load type dryer.

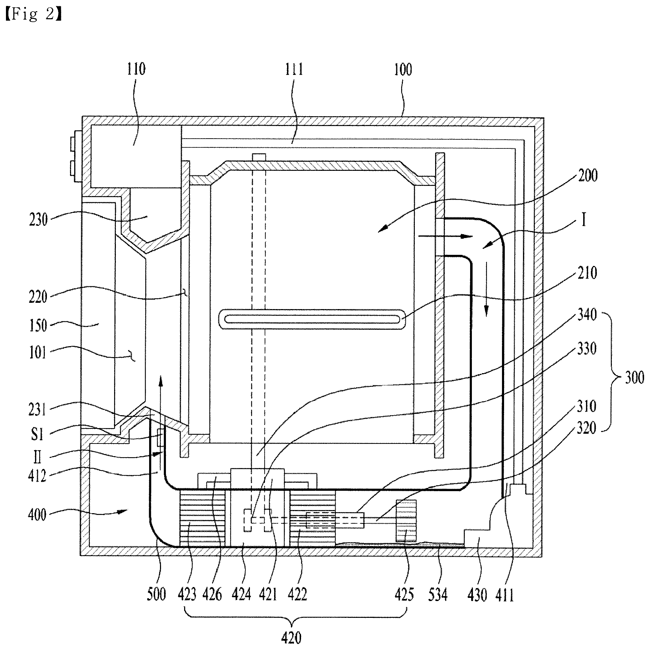

FIG. 2 is a sectional diagram illustrating the inner structure of the laundry treating apparatus 10.

The laundry treating apparatus 10 may include a drum 200 rotatably mounted in the cabinet 100 and configured to hold clothes; a drive unit 300 configured to rotate the drum 200; a hot air supply unit 400 configured to supply hot air to the drum; and a base 500 provided to support or install the hot air supply unit 400.

The drum 200 may include a laundry introduction opening 220 provided to load and unload the laundry, in communication with the opening of the cabinet 100, and be provided in a cylinder shape to accommodate the laundry therein. Also, the drum 200 may further include a lifter 210 provided to lift and agitate the laundry.

In this instance, the laundry treating apparatus 10 may further include a gasket 230 provided between the opening of the cabinet 100 and the laundry introduction opening 220 of the drum to prevent the laundry from being discharged there between.

The hot air supply unit 400 may include an outlet duct 411 provided to discharge the moisture of the laundry and the air having passed the laundry from the drum, in communication with one side of the drum 200; and a heat pump 420 configured to chill the air having passed the outlet duct 411 and remove the moisture from the air and re-heat the air; and an inlet duct 412 configured to suck the air having passed the heat pump into the drum 200.

The gasket 230 may include a duct connection hole 231 provided to communicate with the inlet duct 412.

The heat pump 420 may include an evaporator 422 configured to chill the air having passed the outlet duct 411; a compressor 421 configured to compress and heat the refrigerant having passed the evaporator; a condenser 423 configured to heat the air by using the refrigerant having passed the compressor 421 to generate high-temperature dry hot air; and an expansion valve 424 configured to expand the refrigerant having passed the condenser 423 to lower the temperature.

In one embodiment, the base 500 may define a bottom surface of the laundry treating apparatus 10, while supporting the heat pump 420.

The base 500 has one end in communication with the outlet duct 411 and the other end in communication with the inlet duct 412 and the heat pump 420 may be installed in the base 500 such that air may penetrate the base 500. Accordingly, the water condensed from the evaporator 422 may be collected in the base 500 and a drainage pump 430 configured to discharge the collected water may be installed in the base 500.

Specifically, a collection portion 534 may be provided in a lower area of the base 500 to collect the condensed water (hereinafter, the condensate). The drainage pump 430 may be provided to drain the condensate collected in the collection portion 534. Also, the drainage pump 430 may transfer the collected water to the communication tank 110 and an accommodation pipe 111 is connected with the drainage pump 430. Accordingly, when the condensate is collected in the base 500 by a preset amount, the collected condensate may be transferred to the accommodation tank 110 and the user may take out the accommodation tank 110 to remove the collected condensate.

In one embodiment, the drive unit 300 may be provided to rotate the drum200. The drive unit 300 may include a drive motor 310 configured to provide the power for rotating the drum 200; a drive shaft 320 that is rotary through the drive motor 310; a pulley 330 coupled to one end of the drive shaft 320; and a belt 340 formed in a closed curve connected with an outer circumferential surface of the drum 200.

The drive unit 300 may further include a hot air supply unit 400 coupled to the other end of the drive shaft 320; and a circulation fan 425 configured to provide the power for circulating internal air of the drum 200.

The circulation fan 425 may be installed in the hot air supply unit 400 or in an area in communication with the hot air supply unit 400 so as to circulate the air in the drum 200 and the hot air supply unit 400.

Accordingly, when the drive motor 310 is actuated, the drum 200 may be rotated and the circulation fan 425 may circulate the internal air of the drum 200.

After blowing the internal air of the drum via the discharge duct 411 in an I-direction, the circulation fan 425 may load the air into the inlet duct 412 in II -direction via the base 500 and the hot air supply unit 400.

In one embodiment, the laundry treating apparatus 10 may include a temperature sensor S1 configured to sense the temperature of the air having passed the drum 200 or the hot air supply unit 400. The temperature sensor S1 may be provided in the hot air supply unit 400.

As one example, the temperature sensor S1 may be provided in the inlet duct 412 and sense change in the temperature of the air having passed the hot air supply unit 400. Accordingly, overall check-up for a drying state of the laundry and an operational state of the heat pump 420 as well as the variation of the air temperature inside the drum 200 may be facilitated by using the temperature sensor S1.

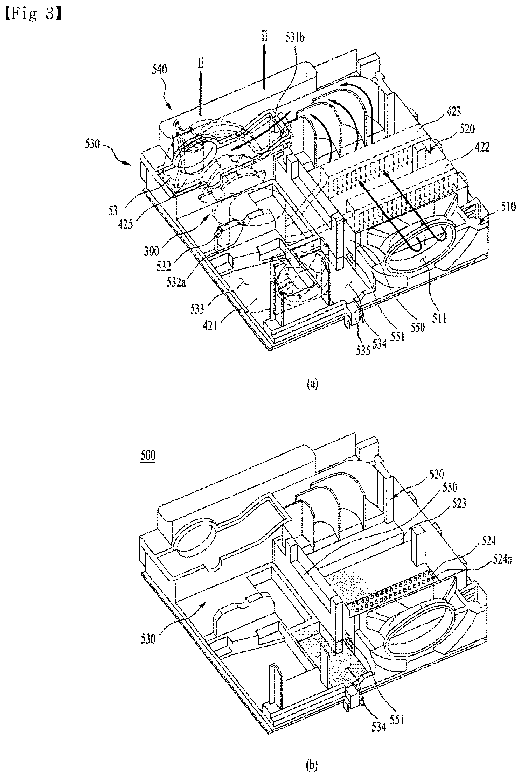

FIG. 3 is a diagram viewed from a view above a rear surface towards a front surface of the base 500.

Referring to FIG. 3 (A), the base 500 may include an outlet connection duct 510 in communication with the discharge duct 411; an air flow portion 520 provided to install the evaporator 422, the condenser 421 and the expansion valve of the heat pump 420; an inlet connection duct 540 in communication with the inlet duct 540 and configured to suck the air having passed the air flow portion 520; and a device mounting portion 530 partitioned off by a partition wall 550 and having several devices including the compressor 421 and the drainage pump 430 supportedly installed therein.

The internal air of the drum 200 may not be discharged into the device mounting portion 530 by the partition wall 550 and the air may be shut off by the partition wall 550, without the collision with the other devices, so as to reduce the air resistance.

The device that needs to directly contact with the air discharged from the drum 200 may be installed in the air flow portion 520 and the device that needs not contact with contact with the dry air may be installed in the device mounting portion 530.

The air flow portion 520 may be provided as a housing that defines an air channel for the air discharged from the drum 200 while accommodating the evaporator 422 and the condenser 423. The air flow portion 520 may be partitioned off from the device mounting portion 530 by the partition wall 550.

The outlet connection duct 510 provided in one end of the air flow portion may be coupled to an outer or inner circumferential surface of the outlet duct 411 and include a through hole 511 formed to draw the air discharged from the outlet duct 411 into the air flow portion 520.

The outlet connection duct 510 may be provided to have a larger and larger area towards the air flow portion 520 from the through-hole 511. That is to lower the speed of the air flow from the outlet duct 411 and then increase the amount of the heat exchange performed in the evaporator 422.

In this instance, a plurality of collection ribs 521 may be provided in the other end of the air flow portion 520 to move the air having passed the condenser 423 into the inlet connection duct 540. The collection ribs 521 may function to lower the flow resistance of the high-temperature dry air or hot air having passed the condenser 423 and guide it into the inlet duct 412.

The device mounting portion 530 may include a circulation fan mounting area 531 provided to partially accommodate the circulation fan 415 to supportedly install it therein; a drive unit mounting area 532 provided to supportedly dispose the drive unit 300; a compressor mounting area 533 provided to support the compressor; and a condensate collection portion 534 provided to collect the water condensed from the evaporator 422. The drainage pump 430 may be coupled to an upper surface of the condensate collection portion 534.

The circulation fan 425 may be configured to provide the power for blowing the air towards the air flow portion 520 and the circulation fan mounting area 531 may be communicable with the inlet duct 412 and the air flow portion 520.

One surface of the circulation fan mounting area 531 is penetrated to face ends of the collection ribs 521 and the other surface is penetrated to face the inlet duct 412 to supply the hot air to the inlet duct 412. In this instance, a shaft support area 531A may be provided in the air where the circulation fan mounting area 531 faces the drive unit mounting area 532.

A pulley support area 532A for supporting the other end of the drive shaft may be provided in the area of the drive mounting area 532 that faces the compressor mounting area 533.

In this instance, the evaporator 422 and the condenser 433 may be formed by connecting a plurality of heat exchange plates and a plurality of refrigerant pipes that area connected with each other. The plurality of the heat exchange plates may be formed of metal and a refrigerant may flow through the refrigerant pipes. The heat exchange plates may be arranged in parallel with the air flow direction. The high-temperature humid air discharged from the drum 200 may be chilled while passing through the evaporator 422. At this time, the moisture is condensed to become a condensate and stored in a lower area of the air flow portion 520. After that, the air passing the condenser 433 may be heated to become a high-temperature dry air. The high-temperature dry air may be supplied to the drum 200 and dry the laundry loaded in the drum.

Referring to FIG. 3 (B), the air flow portion 520 may include an evaporator mounting area 524 provided to mount the evaporator; and a condenser mounting area 523 provided to mount the condenser.

The evaporator mounting area 524 may include a plurality of projections 524a provided to prevent foreign substances (e.g., lint) discharged from the drum 200 from coming into the condensate collection portion 534. The plurality of the projections 524a may be arranged along both sides of a lower end of the evaporator 422.

The condenser mounting area 523 may be provided as a groove having a lower end of the condenser inserted therein, because it has no possibility that water congestion caused by the heat generation of the condenser 423. Accordingly, the fixing between the condenser 423 and the base 500 may be strengthened.

In this instance, the water condensed from the evaporator 422 may be collected in a bottom surface of the air flow portion 420 and flow towards the condensate collection portion 534 along the through-hole 551 penetrating the partition wall 550. At this time, the bottom surface of the air flow portion 420 may be tilted towards the through-hole 551 and the condensate collection portion 534 may be provided lower than the bottom surface of the air flow portion 420.

When the water condensed from the evaporator 422 is increased by a large amount of laundry or a dry cycle, the condensate is likely to flow over the condensate collection portion 534 and the overflow condensate even remain the bottom surface of the air flow portion 420 after flowing along the through-hole 551.

If a lot of condensate remains in the air flow portion 420, the condensate is likely to be re-contained in the air passing the air flow portion 420 and then the drying performance is likely to deteriorate.

Accordingly, it is preferred that the condensate is discharged before overflowing into the air flow portion 420 from the condensate collection portion 534.

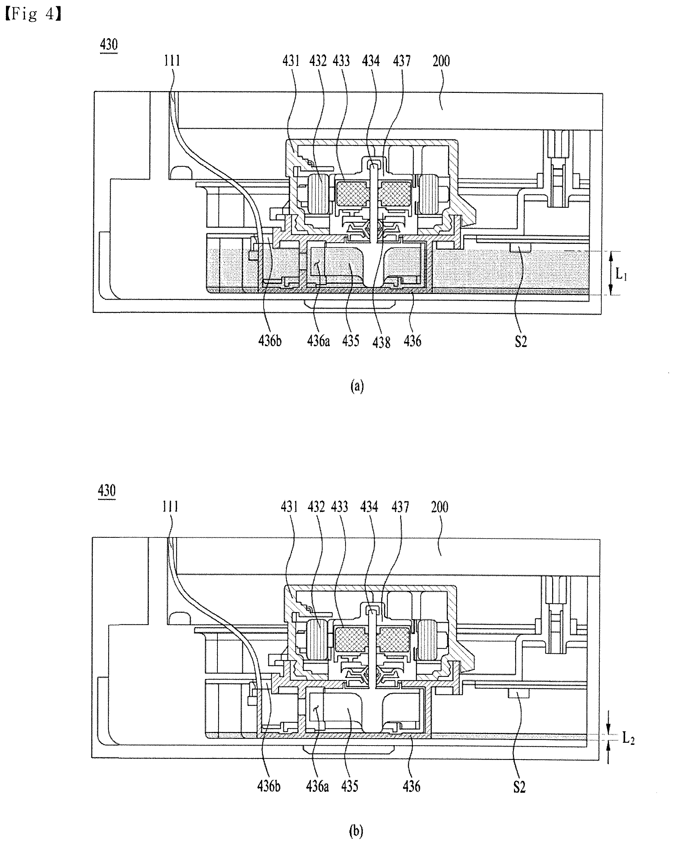

FIG. 4 is a diagram illustrating the drainage pump 430 configured to discharge water from the condensate collection portion 534.

FIG. 4 (A) illustrates that water is collected in the condensate collection portion 534 and FIG. (B) illustrates that the water is discharged from the condensate collection portion 534.

The condensate collection portion 534 may include a water level sensor S2 configured to sense a water level of the condensate. When the water level sensor S2 senses that the water level reaches a reference level L1 in the condensate collection portion 534, the controller P determines that the water level reaches a full water level and it is implemented to drive the drainage pump 430 to discharge the water from the condensate collection portion 534. In this instance, the drainage pump 430 may be continuously or intermittently actuated whenever the water level reaches the full water level. Accordingly, the condensate may be prevented from overflowing even to the air flow portion 420 from the condensate collection portion 534.

It is shown that the water level sensor is a contact sensor. But, the water level sensor may be a pressure sensor or any types of sensors, only if capable of sensing a water level.

The drainage pump 430 may include a motor unit including a stator 432 configured to form a rotating field or rotating magnetic field, a rotor 433 that is rotatable by the rotating field and a motor shaft 434 rotatable together with the rotor 433; and an impeller 435 that is rotatable by being coupled to the shaft 434.

The drainage pump 430 may include a first housing 431 provided to accommodate the motor unit; and a second housing 436 provided to accommodate the impeller 435. Water may be prevented from flowing into the first housing 431.

In this instance, the motor shaft 434 and the rotor 433 are rotary, independent from the rotor 432 such that the drainage pump 430 may further include an inner case 437 to support the motor shaft 434 and the rotor 433.

A bearing unit 438 provided to support the motor shaft 434 may be further provided in the air between the first housing 431 and the second housing 436 which is penetrated by the motor shaft 434.

An water inlet hole 436A formed to draw the water from the condensate collection portion 534 and a water outlet hole 436B formed to discharge the water from the second housing 436 may be provided in one surface of the second housing 436. A accommodation pipe 111 in communication with the accommodation tank may be connected with the water outlet hole 436B.

Accordingly, when the impeller 435 is rotated, the water may be drawn into the water inlet hole 436A from the condensate collection portion 534 and discharged along the water outlet hole 436B to be collected in the accommodation tank 110. The impeller 435 is rotating at a high speed and the impeller 435 may be spaced a preset L2 apart from the condensate collection portion 534. As shown in FIG. 4 (B), the water level may be lowered to the minimum water level L2 located in a lower end of the impeller 435. Even when the drainage pump 430 completes the water discharging, the water corresponding to the minimum water level L2 may remain.

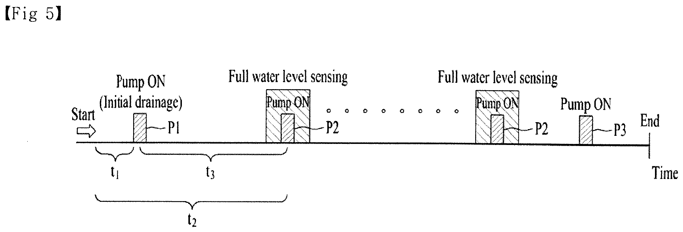

FIG. 5 illustrates the operation of the drainage pump 430 in time order when the laundry treating apparatus 10 performs the dry cycle.

When the dry cycle of the laundry treating apparatus 10 is performed, an initial drainage step PI may be performed to complete the drainage of the condensate collected during the former dry cycle by actuating the drainage pump 430 in a preset reference time t1.

Specifically, when the dry cycle is performed in the laundry treating apparatus 10, the drainage pump 430 is actuated in the preset reference time period t1 to complete the drainage of the condensate collected during the former dry cycle.

As one example, in the former dry cycle, the user is able to recognize the drying is completed before the dry cycle ends and stop the operation of the laundry treating apparatus 10. At this time, the water condensed from the evaporator 422 is likely to remain in the condensate collection portion 534 as it is.

In case the moisture or water is condensed from the evaporator 422 after the dry cycle restarts in this state, new condensate is added to the condensate collected in the condensate collection portion 534 in the former dry cycle such that the water level may drastically rise enough to cause water leakage.

Accordingly, when the reference time period t1 passes after the operation of the laundry treating apparatus starts, the initial drainage step PI may be performed to prevent the water leakage and overflow even if new condensate is collected.

The initial drainage step PI may be performed until the water level sensor S2 senses that the water level is lower than a reference value or for a preset time period regardless of the water level sensor S2. The reference value may be the water level L2 that reaches the impeller and the reference time may be the time period for which all of the water is drained even if the water level is the full level in the condensate collection portion 534.

After that, the laundry treating apparatus 10 may drive the drainage pump 430 whenever sensing that the water level of the condensate collection portion 534 is the full level. In other words, the laundry treating apparatus 10 may perform a full water level drainage step P3 for actuating the drainage pump 430 by actuating the hot air supply unit 400 whenever the water level of the condensate collection portion 534 is the full water level that is L1 or more. The point of time at which the full water level drainage step P2 is performed may be variable according to the amount of the moisture or water contained in the laundry or the amount of the laundry.

In this instance, the laundry treating apparatus 10 may perform a final drainage step P3 for re-actuating the drainage pump 430 when the actuation of the hot air supply unit 400 is completed by the completion of the drying process. The final drainage step P3 may be performed even unless the water level reaches the full water level that is L1 or more, so as to remove the condensate that remains in the condensate collection portion 534. Accordingly, various safety accidents may be prevented such as condensate spoilage or water leakage in the next dry cycle.

Different from what is described above, the laundry treating apparatus 10 may start the operation at the point of time t2 when the water level reaches the full water level, without performing the initial drainage step PI and actuate the drainage pump 430 in a preset expected full water level time period after the initial drainage step PI, regardless of the full water level.

Meanwhile, the laundry treating apparatus 10 might be frozen and burst in the winter or a low-temperature environment unless all of the condensate is drained from the condensate collection portion 534.

In addition, even when the drainage pump 430 drains all of the condensate from the condensate collection portion 534 as possible, a predetermined amount of water as much as the water level of L2 could be always left by a gap formed between the impeller 435 and the condensate collection portion 534. At this time, the volume of the water is expanded enough to contact with the impeller 435 while the water is being frozen.

In any cases, when the condensate is frozen in the state of being in contact with the impeller 435, the drainage pump 430 might be constrained and it could be impossible to actuate the drainage pump 430. In addition, if the drainage pump 430 is actuated forcedly by a command for actuating the drainage pump 430 continuously input in a state where the drainage pump 430 is constrained, the drainage motor of the drainage pump 430 configured of the rotor 433, the motor shaft 434 and the stator 432 may be damaged.

At this time, the constrained state means a state where the impeller 435 is locked by the ice absolutely not to be rotated at all or where the impeller 435 is rotatable below a reference rotation number. The reference rotation number may mean the rotation number at which the impeller 435 is rotated in a normal state according to the command of the controller or the minimum rotation number that is needed so as to perform the command.

In addition, the reference rotation number may be corresponding to the rotation number at which the impeller 435 is not constrained by the ice or that is needed to overcome the constraining of the ice.

To prevent that, the laundry treating apparatus 10 may shut off the performance of the dry cycle when the drainage motor 430 is constrained. Also, it may be displayed on the display unit 121 by using an error display light that the performance of the dry cycle is shut off so as to induce the user to try to input the operation command continuously.

However, when the drainage pump 430 is frozen and constrained, the user has to wait until the frozen drainage pump 430 is naturally thawed. In addition, if the low temperature state maintains for a predetermined time period such as during the freezing winter season, the frozen drainage pump 430 will not be naturally thawed and the user is not able to operate the laundry treating apparatus 10 for that time period disadvantageously.

In addition, when the user has to thaw the condensate by using warm water, there might be the accidents caused by a shortcut or an electric leakage.

Accordingly, even when the condensate is frozen, the laundry treating apparatus 10 has to thaw the frozen condensate actively and restore it in a normal state.

As mentioned above, the laundry treating apparatus 10 may display an error on the display unit if the drainage pump 430 is constrained and shut off the performance of the dry cycle. However, the drainage pump 430 might be constrained by diverse reasons. As examples of the reasons, foreign substances are drawn into the drainage pump 430 or the rotor 433 or the stator 431 has a shortcut.

In other words, it cannot be sensed only based on the presence of the drainage pump constraining whether the condensate collected in the condensate collection portion 534 is frozen. The user is not able to sense whether the error displaying refers to the frozen state or not.

Accordingly, it is necessary that the laundry treating apparatus 10 should accurately recognize and display the frozen state among many errors.

For that, the laundry treating apparatus 10 may accurately sense the frozen state and actively thaw the frozen condensate.

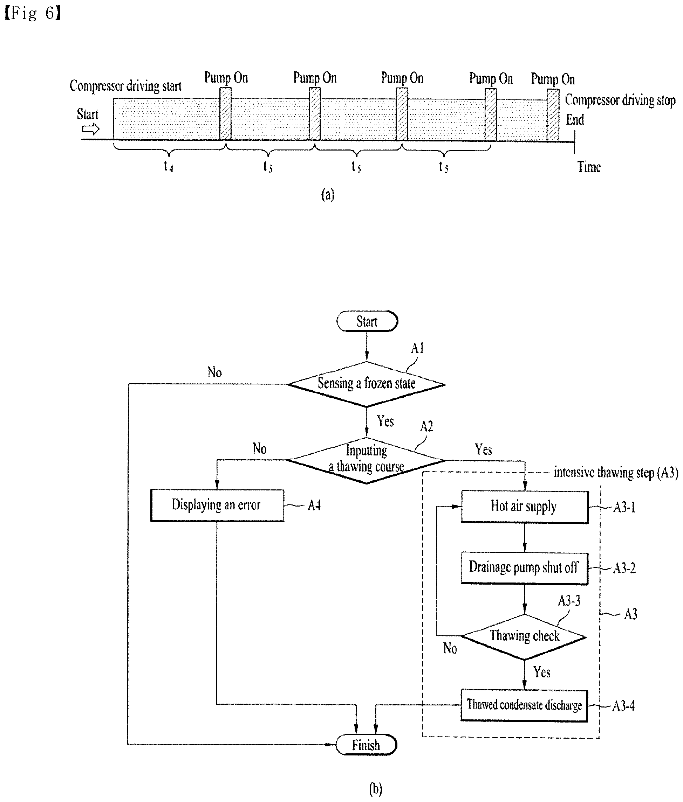

FIG. 6 illustrates a control method for recognizing the frozen state, when the laundry treating apparatus 10 is in a frozen state, and actively thawing the frozen laundry treating apparatus.

FIG. 6 (A) illustrates an algorithm of a thawing course for actively thawing the frozen condensate and FIG. 6 (B) illustrates the operations of the hot air supply unit 400 and the drainage pump 430 that are performed in the thawing course in time order,

The laundry treating apparatus 10 may perform a thawing course input step A2 for sensing whether a thawing command input unit 130 senses a thawing course input; and an intensive thawing step A3 for performing a thawing course configured to thaw the frozen condensate once the thawing command input unit 130 senses the thawing course input in the thawing course input step A2.

The thawing course input step A2 may be configured to sense that a thawing command is input to the thawing command input unit 130 provided in the control panel, when the user senses that the laundry treating apparatus 10 is frozen before the laundry treating apparatus 10 sense the frozen state itself.

The intensive thawing step A3 may include a hot air supply step A3-1 for actuating at least one of the hot air supply unit 400 and the drive unit 300. Once the hot air supply unit 400 is actuated in the hot air supply step A3-1, the heat generated in the compressor 421 may be circulated in the air flow portion 520 through the condenser 423 and the circulation fan 425 and then the heat may heat the base 500.

At the same time, the heat generated during the hot air supply step A3-1 may be transmitted to the condensate collection portion 534 via the through-hole 551. Accordingly, the frozen condenser may be provided with the heat and then thawed.

Meanwhile, the drainage pump 430 might be constrained by the frozen condensate. The intensive thawing step A3 may further include a drainage pump shut off step A3-2 for shutting off the operation of the drainage pump 430 for a reference time period T4. Accordingly, the initial drainage step P1 may be omitted in the intensive thawing step.

The reference time period T4 may be the time period for which the hot air supply unit 400 is performed to perform the thawing by a preset degree. As one example, the reference time period t4 may be a time period in a year after the hot air supply step A3-1 is performed.

The intensive thawing step A3 may further include a thawing check step A3-3 for checking whether the thawing of the condensate collected in the condensate collection portion is performed or completed by driving the drainage pump 430, when the reference time period t4 passes.

The thawing check step A3-3 may check a thawing state by driving the drainage pump at a first time t5 interval after the reference time period t4.

Specifically, the thawing check step A3-3 may include a step for checking whether the impeller 435 of the drainage pump 430 is rotated by drainage pump 430 after the reference time period t4. The controller of the laundry treating apparatus 10 may recognize the rotation of the impeller 435 based on the measured amount of currents applied to the drainage pump 430.

At this time, the controller may stop the drive of the drainage pump 430 unless the rotation number of the impeller reaches a reference rotation number and perform the hot air supply step A3 and the drainage pump shut-off step A3-2 for the first time t5. The drive of the drainage pump 430 in the drainage pump shut off step A3-2 may be the testing time for determining whether the condensate is thawed, not the time taken to drain the condensate. As one example, the testing time may be 10. If the testing time is too long, over-load may be applied to the drainage pump 430.

The controller may check whether the thawing is normally performed or the speed of the thawing by sensing the rotation number of the impeller 435 in the thawing check step A3-3. Also the controller may adjust the first time interval based on the thawing state.

The laundry treating apparatus in accordance with the present invention may prevent the drainage pump 430 from being forcedly driven even when the constraining is removed completely by the thawing check step A3-3 and also it may sense that the thawing is not completed.

The controller may recognize that the thawing is completed when sensing that the drainage pump 430 is rotated at a reference rotation number or more.

The controller may perform a thawed water discharge step A3-4 for discharging all of the thawed water by rotating the drainage pump 430 at the reference rotation number or more. The thawed water discharge step A3-4 may continuously drive the drainage pump 430 without stopping, when the thawing check step A3-3 senses that the drainage pump 430 is rotated at the reference rotation number or more.

In this instance, the laundry treating apparatus 10 may perform a frozen state sense step A1 for actively determining whether the condensate of the condensate collection portion 534 is frozen.

The controller may determine that the condensate of the condensate collection portion 534 is frozen when the drainage pump 430 is constrained with the temperature sensed by the temperature sensor s1 being lower than the reference temperature. When the drainage pump 430 is constrained with the low temperature, the largest reason is that the condensate is frozen.

In one embodiment, the condensate may be frozen below 0°C and the reference temperature may be set as 0°C.

However, if the temperature sensor s1 is provided in the hot air supply unit 400, the temperature may be higher than a room temperature. In addition, when the hot air supply unit 400 is actuated, the temperature sensed by the temperature sensor s1 may be above 0 °C because of the heat generated in the condenser even when the room temperature is below 0 °C.

Accordingly, the temperature of the air passing the temperature sensor s1 has no chance of being sensed below 0°C. Even when the condensate is frozen, the temperature sensed by the temperature sensor s1 is above 0°C and the controller is not able to recognize or sense that the condensate is frozen.

In this instance, it is preferred that the reference temperature is 0°C or higher or the reference temperature is set higher than the freezing point.

As one example, the reference temperature may be 3°C or 5°C. When the drainage pump 430 is constrained with the temperature sensed by the temperature sensor according to the control of the controller in the frozen state sense step A1 being 3 °C or 5°C or lower, the controller may recognize that the condensate of the condensate collection portion 534 is frozen.

The frozen state sense step A1 may be performed when the power unit 140 of the laundry treating apparatus is selected and when it is sensed in the initial drainage step PI that the drainage pump 430 is constrained. When the frozen state is sensed in the frozen state sense step A1, the controller may display the frozen state on the display unit 121 and inform the user of the frozen state to induce the user to select the thawing command input unit 130.

In case the thawing course input step A2 is not performed even when the frozen state is sensed in the frozen state sense step A1, the laundry treating apparatus 10 stops the operation and perform an error display step A4 for displaying the frozen state outside.

The error display step A4 may inactivate all of the buttons, except the thawing command input unit 130 or the power unit 140.

That is to prevent the damage to the laundry treating apparatus 10 caused by the dry cycle performed forcedly.

In this instance, when the thawing course input step A2 is performed while or before the frozen state sense step A1 is performed, the frozen state sense step A1 may be omitted. The thawing check step A3-3 may sense the presence of the frozen condensate and whether to perform the thawing.

Meanwhile, the user's active intension is reflected in the performance of the thawing course input step A2 such that it can be sure that the laundry is not loaded in the drum 200.

When the user recognizes that the laundry treating apparatus is in the frozen state, the main reason of using the laundry treating apparatus is the thawing and it may be expected that the user will not load the laundry into the drum 200.

Accordingly, the intensive thawing step A3 may set the first time period as 30 minutes to minimize the testing drive of the drainage pump 430 and perform the drive of the compressor 421 to thaw the condensate collected in the base 500 more stably and absolutely.

However, the laundry may be held in the drum 200 or the user may desires to dry the laundry together with the thawing of the condensate.

In this instance, when the intensive thawing step A3 is performed, the water contained in the laundry may be collected in the condensate collection portion 534 during the intensive thawing step A3.

Accordingly, a control method is needed that facilitates even the drying of the laundry while considering the condensate collected in the condensate collection portion 534 during the thawing course.

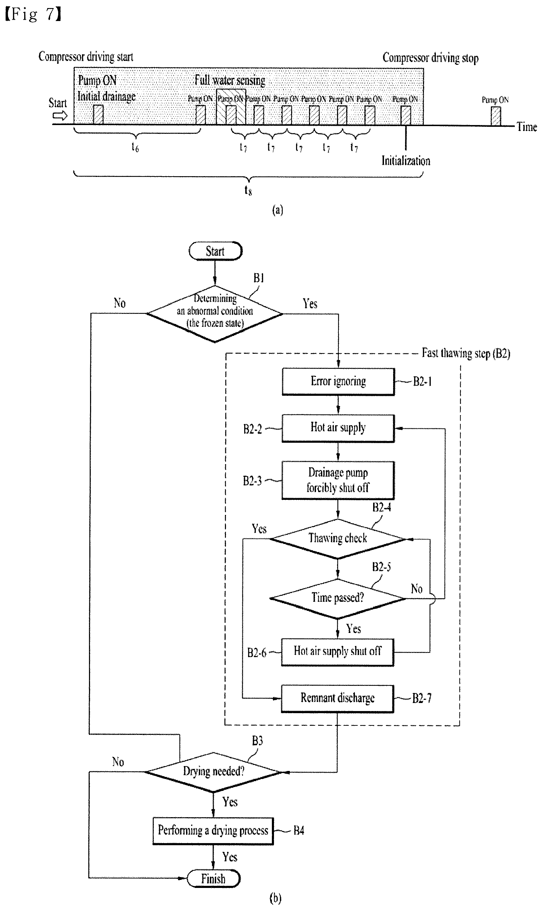

FIG. 7 illustrates another embodiment of the control method that may perform the thawing even when the laundry is held in the laundry treating apparatus.

FIG. 7 (A) illustrates a driving point of the drainage pump 430 and the compressor 421 according to the time and FIG. 7 (B) illustrates an algorithm of the embodiment.

The laundry may be loaded in the drum 200 and the user may input a command for performing the dry cycle to the control panel 120, regardless of the frozen state.

When the dry cycle is performed, the laundry treating apparatus 10 may perform an abnormal condition determining step B1 including a step for sensing whether the condensate of the condensate collection portion 534 is frozen. The abnormal condition determining step B1 may be a step for generally checking whether the dry cycle is performed normally and check whether the drainage pump 430 is constrained by the frozen condensate.

In the abnormal condition determining step B1, the controller may determine that the condensate is frozen when the drainage pump 430 is constrained with the temperature sensed by the temperature sensor s1 being the reference temperature.

At this time, when the temperature sensor s1 provided in the hot air supply unit 400 or the drum 200 might not sense the temperature below 0°C and the reference temperature may be set to be higher than the freezing point of water.

It may be performed at the point at which the initial drainage step P1 is performed to sense the frozen condensate in the abnormal condition determining step B1. The drainage pump 430 is driven in the initial drainage step PI such that it may be sensed whether the drainage pump 430 is constrained.

When it is sensed in the abnormal condition determining step B1 whether the condensate is frozen, the laundry treating apparatus may perform a fast thawing step B2 for immediately thawing the frozen condensate.

In other words, when sensing that the condensate is frozen, the laundry treating apparatus may perform the thawing course configured to prevent the stop of the operation and thaw the frozen condensate immediately. That is to prevent the delay of the dry cycle by immediately performing the thawing.

For that, the fast thawing step B2 may perform an error ignoring step B2-1 for omitting the display of the error on the display unit 121 and omitting the stop of the laundry treating apparatus operation. That is to perform the thawing course immediately.

The fast thawing step B2may include a hot air supply step B2-2 for performing the thawing by driving the hot air supply unit 400 and transmitting warmth even to the condensate collection portion 534.

In addition, the fast thawing step B2may include drainage pump forcibly stopping step B2-3 for shutting off the actuation of the drainage pump for a reference time t6. The reference time t6 may be different from the reference time t4 of the intensive thawing step A3. Accordingly, the reference time t6 may be referenced to as the second reference time t6 and the reference time t4 of the intensive thawing step A3 may be referenced to as the first reference time t4.

The second reference time t6 may be the time period longer than the start point of the hot air supply step B2-2 or the point of time at which the laundry treating apparatus 10 is actuated.

However, the second reference time t6 may be the time period when the water level sensor s2 senses the full water level. The second reference time t6 may be the time period when the water level sensor s2 senses a higher water level than the water level sensed at the start point of the hot air supply step B2-2 or the actuation of the laundry treating apparatus 10.

The reason why the second reference time t6 is related with the water level is that the water level getting higher than the initial water level means that the moisture or water is condensed from the laundry held in the drum 200 and the moisture or water condensed from the laundry contains relatively more thermal energy.

Accordingly, it may be expected that the new condensate is added to the frozen condensate and partially thaws the frozen condensate.

In addition, the fact that a preset amount of new condensate accumulates or is collected may mean that the hot air supply unit 400 is driven for a sufficient time period such that it may be expected that quite a heat is transmitted to the condensate collection portion 534.

Accordingly, the second reference time t6 may be a flexible time period that is variable according to the water level in the condensate collection portion 534.

The water level that determines the second reference time t6 may be defined as a reference water level at which a sufficient amount of water and heat to thaw the frozen condensate is supplied.

The thawing check step B2-4 is performed in consideration of the thawing state such that the delay of the dry cycle may be shut off.

After the second reference time t6, the fast thawing step B2 may include a thawing check step B2-4 for sensing at least one of a state where the condensate of the condensate collection portion 534 is thawed and whether the thawing is completed.

The thawing check step B2-4 of the fast thawing step B2 may be the same with the thawing check step of the intensive thawing step A3.

The thawing check step B2-4 may check whether the frozen condensate is thawed or a state of the thawing by driving the drainage pump 430 at the second time t7 interval from the point when the second reference time passes or the water level reaches the second reference water level.

The second reference time t7 may be shorter than the first time t5 of the intensive thawing step A3 (e.g., 10 minutes). If the second time t7 is longer than the first time t5, the thawing course becomes longer enough to delay the dry cycle.

In addition, the condensate containing a high temperature heat is continuously condensed from the laundry and the drawn condensate is continuously exposed to the hot air such that the condensate collection portion 534 can be thawed faster.

In other words, the controller may determine whether the thawing is performed well while checking the rotation number of the impeller by driving the drainage pump 430 for a preset time period at the second time t7 interval after the second reference time t6.

Meanwhile, the interval of the second time may be adjusted according to the thawing state.

In this instance, when sensing that the rotation number of the drainage pump reaches the reference rotation number or more in the thawing check step B2-4, the controller may determine that the thawing of the condensate collection portion 534 is completed. When determining that the thawing is completed, the controller may perform a remnant discharge step B2-7 for discharging the thawed condensate of the condensate collection portion 534 and the newly collected condensate.

Accordingly, the fast thawing step B2 may end.

Once the remnant discharge step B2 ends, a laundry amount sensing step B3 for determining whether the laundry is loaded may be performed.

That is to determine the duration time of the dry cycle and the course for driving the hot air drive unit by sensing the amount of the laundry loaded in the drum.

In addition, it may be checked whether the laundry is actually loaded in the drum 200. When no laundry is loaded in the drum, the dry cycle may be omitted.

When it is sensed that the laundry is loaded and the dry course or option is determined, the controller may perform a dry performing step B4 for supplying hot air to the laundry and rotating the drum.

Even when the condensate of the condensate collection portion 534 is frozen in a state where the laundry is loaded in the drum 200, the thawing may be completed and even the dry cycle may be performed. Accordingly, the condensate may be automatically thawed without the user's recognizing whether the condensate is frozen such that the drying of the laundry can be always completed.

In this instance, the fast thawing step B2 may include a dry shut-off step B2-6 for shutting off the actuation of the hot air supply unit unless the rotation number of the drainage pump reaches a reference rotation number.

The third time t8 may be the time when the water level of the condensate collection portion 534 becomes higher than the full water level or the time when the compressor 421 is actuated excessively. When the hot air is supplied to the drum 200 for the third time t8 or more in a state where the drainage pump 430 is not driven smoothly, the condensate might overflow from the condensate collection portion 534.

Accordingly, the hot air supply may be cut off not to generate additional condensate. That may be the step that promotes the natural thawing after the dry shut off step B2-6.

The newly supplied condensate has quite a thermal energy. Even when the room temperature is low, the frozen condensate may be continuously thawed.

In this instance, the dry shut off step B2-6 may continuously supply the residual heat of the drum 200 and the laundry to the condensate collection portion 534. In other words, the dry shut off step B2-6 may be the step for shutting off only the driving of the compressor 421 and the thawing check step B2-4 may be continuously performed. Accordingly, when the rotation number of the drainage pump 430 reaches the reference rotation number or more during the dry shut off step B2-6, the remnant discharge step B2-7 may be performed and the fast thawing step B2 may be completed.

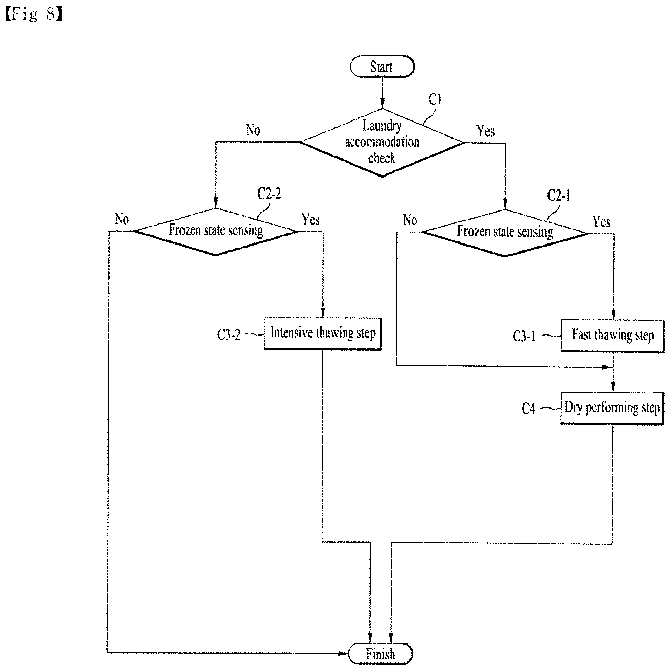

FIG. 8 illustrates the last embodiment of the control method of the laundry treating apparatus.

When the operation starts, the laundry treating apparatus 10 may perform a laundry accommodation check step C1 for checking whether the drum 200 accommodates the laundry by sensing the amount of the laundry. As one example, the amount of the laundry may be checked by determining the amount of the electric currents applied when the drum 200 is rotated.

When it is sensed whether the laundry is loaded in the laundry accommodation check step C1, a proper course or option may be determined to perform a drying process based on the sensed laundry amount.

When the laundry accommodation check step C1 ends, a frozen state sensing step C2 for checking whether a frozen state is generated in the laundry treating apparatus 10 may be performed.

The frozen state sensing step C2 may be the step for sensing whether the temperature is a reference temperature or lower in a state where the drainage pump 430 is constrained.

When the laundry accommodation check step C1 senses that the drum 200 accommodates no laundry and the frozen state sensing step C2-2 senses the frozen state, an intensive thawing step C3-2 for thawing the frozen condensate may be performed. The intensive thawing step C3-2 may perform the intensive thawing for the condensate collection portion 534, without considering the drying of the laundry. Such the intensive thawing step C3-2 may be the step that prevents the damage of the drainage pump 430 to the maximum and it may be equal to the intensive thawing step B2 shown in FIG. 2.

In other words, the intensive thawing step C3-2 may include a hot air supply step for driving one or more of the hot air supply unit 400 and the drive unit 300; a drainage pump shut off step for shutting off the drive of the drainage pump for a first reference time period; a thawing check step for sensing the rotation number of the impeller 435 provided in the drainage pump by consistently maintaining the driving of the hot air supply unit 400 after the first reference time and intermittently driving the drainage pump 430 at the first time interval at the same time; and a frozen water discharge step for discharging the thawed water by determining that the thawing is completed when the rotation number is the reference rotation number or more.

When the laundry accommodation check step C1 checks that the drum 200 accommodates no laundry and the frozen state sensing step C2-2 senses no frozen state, the controller may end the operation of the laundry treating apparatus 10 to prevent unnecessary power consumption.

When the laundry accommodation check step C1 senses the laundry loaded in the drum and the frozen state sensing step C2-1 senses the frozen condensate, a fast thawing step C3-1 for preparing for the dry cycle while thawing the frozen condensate may be performed.

The fast thawing step C3-1 may be equal to the fast thawing step B2 shown in FIG. 6.

In other words, the fast thawing step C3-1 may include a hot air supply step for driving he drive unit 300 and the hot air supply unit 400; a drainage pump forcibly stopping step for stopping the drive of the drainage pump for the second reference time period; a thawing check step for intermittently driving the drainage pump 430 at a second time interval that is shorter than the first time after the second reference time and consistently driving the hot air supply unit 400; and a remnant discharge step for discharging the condensate when the impeller 435 is rotated at a reference rotation number or more in the thawing check step.

In this instance, the fast thawing step C3-1 may further include an error ignoring step for shutting off the stopping of the laundry treating apparatus operation even when the frozen condensate is sensed. That is to prevent the delay of the dry cycle and perform the fast thawing.

The fast thawing step C3-1 may further include a hot air supply shut off step for shutting off the drive of the hot air supply unit 400 when it is sensed that the impeller 435 is not rotated at a reference rotation number or more for a third time period. That is to prevent the overflow of the condensate from the condensate collection portion 534.

After that, a dry performing step C4 for completing the drying process for the laundry by performing the dry cycle when even the remnant discharge step is completed. Accordingly, the laundry treating apparatus 10 may perform the thawing of the condensate and the laundry drying at the same time. Unless the frozen state sensing step C2-1 senses the frozen state, the fast thawing step C3-1 may be omitted and the dry performing step C4 may be performed immediately.

The invention is further defined by the following items:
1. A control method of a laundry treating apparatus comprising a drum (200) rotatably mounted in the cabinet (100) and configured to accommodate laundry; a drive unit (300) configured to rotate the drum (200); a hot air supply unit (400) configured to supply high-temperature air to the drum (200), in communication with the drum (200); a collection portion (534) provided to be communicated with the hot air supply unit (400) to collect water condensed; and a drainage pump (430) configured to discharge the water collected in the collection portion (534) outside the cabinet (100), the control method comprising:
   an abnormal condition determining step (A1, B1, C2) for determining whether the condensate in the collection portion (534) is frozen; and
   a thawing step (A3, B2, C3) of thawing the condensate when it is determined that the condensate is frozen.
2. The control method of the laundry treating apparatus of item 1, the laundry treating apparatus further comprising:
   a temperature sensor (S1) configured to sense the temperature of one or more of the drum (200) and the hot air supply unit (400),
   wherein the abnormal condition determining step (A1, B1, C2) determines that the condensate of the collection portion (534) is frozen, when it is sensed that the drainage pump (430) is driven at a reference rotation number or less with the sensed temperature being a reference temperature or less.
3. The control method of the laundry treating apparatus of item 2, wherein the reference temperature is higher than the freezing point of water.
4. The control method of the laundry treating apparatus of item 1, wherein the thawing step (B2) further comprising:
   an error ignoring step (B2-1) for implementing the controller not to activate the stop of the laundry treating apparatus, when it is determined that the condensate in the collection portion (534) is frozen.
5. The control method of the laundry treating apparatus of item 1, wherein thawing step (B2, C3) further comprising:
   a fast thawing step (B2, C3) for transferring heat to the collection portion (534) by driving the hot air supply unit (400), when it is determined that the condensate of the collection portion is frozen.
6. The control method of the laundry treating apparatus of item 5, wherein the fast thawing step (B2, C3) comprises,
   a hot air supply step (B2-2) for transferring warmth even to the collection portion (534) by driving the hot air supply unit (400); and
   a drainage pump forcibly stopping step (B2-3) for shutting off the operation of the drainage pump (430) for a reference time period.
7. The control method of the laundry treating apparatus of item 6, the fast thawing step (B2, C3) further comprising:
   a thawing check step (B2-4) for sensing one or more of a state where the condensate of the collection portion is thawed and whether the thawing is completed.
8. The control method of the laundry treating apparatus of item 7, the laundry treating apparatus further comprising:
   a water level sensor (S2) configured to sense a water level of the collection portion (534),
   wherein the thawing check step (B2-4) comprises checking the thawed state by driving the drainage pump (430), when the reference time passes or the water level reaches a reference water level.
9. The control method of the laundry treating apparatus of item 8, wherein the thawing check step (B2-4) comprises checking the thawing state by driving the drainage pump (430) at a second time interval from when the water level reaches the reference water level.
10. The control method of the laundry treating apparatus of item 8, the fast thawing step (B2) further comprising:
   a drying shut off step (B2-6) for shutting off the drive of the hot air supply unit (400) unless the rotation number of the drainage pump (430) reaches a reference rotation number or more for a third time period during the thawing check step.
11. The control method of the laundry treating apparatus of item 10, wherein the hot air supply unit (400) comprises:
   a heat pump (420) configured to supply hot air to the drum (200); and
   a circulation fan (425) configured to circulate air inside the drum (200) and the hot air supply unit (400),
   wherein the drying shut off step (B2-6) comprises driving the circulation fan (425).
12. The control method of the laundry treating apparatus of item 10, wherein the thawing check step (B2-4) comprises determining that the thawing of the collection portion is completed, when it is sensed that the drainage pump (430) is rotated at the reference rotation number or more, and
   wherein the control method of the laundry treating apparatus further comprises a remnant discharge step (B2-7) for discharging the condensate of the collection portion (534), when it is determined that the thawing is completed.
13. The control method of the laundry treating apparatus of item 1, wherein the laundry treating apparatus further comprise a thawing command input unit (130) configured to input a command for thawing the water of the collection portion (534) to the controller,
   the control method comprising:
   a thawing course input step (A2) for sensing an input of the thawing command input unit (130); and
   an intensive thawing step (A3) for transferring heat to the collection portion (534) by driving the hot air supply unit (400).
14. The control method of the laundry treating apparatus of item 13, wherein the intensive thawing step (A3) comprises,
   a hot air supply step (A3-1) for transferring heat to the collection portion (534) by driving the hot air supply unit (400); and
   a drainage pump shut off step (A3-2) for shutting off the drive of the drainage pump (534) for a reference time period.
15. The control method of the laundry treating apparatus of item 13, further comprising:
   a thawing check step (A3-3) for sensing one or more of a state where the condensate of the collection portion (534) is thawed and whether the thawing is completed.

## Claims

1. A laundry treating apparatus comprising:
a cabinet (100) that defines an exterior appearance;
a drum (200) rotatably received in the cabinet (100) and configured to accommodate laundry;
a drive unit (300) configured to rotate the drum (200);
a hot air supply unit (400) provided to be communicated with the drum (200) to supply high-temperature air to the drum (200);
a collection portion (534) provided to collect the water condensed from the drum (200) and to be communicated with the hot air supply unit (400);
a drainage pump (430) configured to discharge the water collected in the collection portion (534) outside the cabinet (100);
a controller (P) configured to control the operations of the drive unit (300), the hot air supply unit (400) and the drainage pump (430);
**characterized in that** the laundry treating apparatus further comprises
a thawing command input unit (130) configured to input a command for thawing the water of the collection portion (534) to the controller (P).

2. The laundry treating apparatus of claim 1, wherein the controller is configured to drive the hot air supply unit (400) and shut off the drive of the drainage pump (430) for a reference time (t4) period, when the thawing command input unit (130) is input.

3. The laundry treating apparatus of claim 2, wherein if the reference time (t4) passes, the controller (P) is configured to drive the drainage pump (430) to check a state where the thawing of the condensate collected in the collection portion (534) is performed or whether the thawing is completed,

4. The laundry treating apparatus of claim 3, wherein the controller (P) is configured to drive the drainage pump (430) at a first time (t5) interval after the reference time (t4) to check a thawed state of the frozen condensate.

5. The laundry treating apparatus of claim 4, wherein the controller (P) is configured to adjust the first time (t5) interval based on the thawing state.

6. The laundry treating apparatus of claim 3, wherein the controller (P) is configured to check that the collection portion (534) is thawed by sensing that the rotation number of the drainage pump (430) is a reference rotation number or more.

7. The laundry treating apparatus of claim 6, wherein the controller (P) is configured to discharge the thawed condensate by driving the drainage pump (430) when the rotation number of the drainage pump (430) is the reference rotation number or more.

8. The laundry treating apparatus of claim 6, wherein the controller (P) is configured to drive the hot air supply unit (430) for the first time (t5) period and shut off the drive of the drainage pump (430) for the first time (t5) period when the rotation number of the drainage pump (430) is the reference rotation number or less.

9. The laundry treating apparatus of claim 1, further comprising:
a temperature sensor (S1) configured to sense the temperature of the drum (200) or the hot air supply unit (400),
wherein the controller (P) is configured to determine that the condensate of the collection portion (534) is frozen, when sensing that the sensed temperature is lower than a reference temperature or the drainage pump (430) is driven at a reference rotation number or less.

10. The laundry treating apparatus of claim 9, wherein the reference temperature is higher than the freezing point of water.

11. The laundry treating apparatus of claim 9, wherein the controller (P) is configured to stop the operation of one or more of the drive unit (300), the hot air supply unit (400) and the drainage pump (430), when it is sensed that the condensate of the collection portion (534) is frozen but that the thawing command input unit (130) is not input.

12. The laundry treating apparatus of claim 9, further comprising:
a display unit (121) configured to display a current state of the laundry treating apparatus
wherein the controller (P) is configured to display an error on the display unit (121) when it is sensed that the condensate of the collection portion (534) is frozen but that the thawing command input unit (130) is not input.

13. The laundry treating apparatus of claim 9, wherein the controller (P) is configured to perform an initial drainage for completing the drainage of the condensate of the collection portion (534) collected during a former dry cycle by actuating the drainage pump (430) in a preset reference time (t1), when a dry cycle of the laundry treating apparatus is performed and
determine whether the condensate of the collection portion (534) is frozen, when performing the initial drainage.

14. The laundry treating apparatus of claim 9, further comprising:
a power input unit (140) configured to input the power of the laundry treating apparatus
wherein the controller (P) is configured to determine that the condensate of the collection portion is frozen, when the power input unit (140) is selected.

15. The laundry treating apparatus of claim 14, wherein the controller (P) is configured to inactivate all of input units except the thawing command input unit (130) and the power unit (140) when it is sensed that the condensate of the collection portion (534) is frozen but that the thawing command input unit (130) is not input.
